# EUROPÄISCHE PATENTANMELDUNG

(11) **EP 4 843 367 A1**
(43) Veröffentlichungstag der Anmeldung: **25.11.2026**
(21) Anmeldenummer: 25178378.3
(22) Anmeldetag: 22.05.2025
(51) Int. Cl.: A01B 51/02, B62D 49/06, A01D 34/86

(54) **LANDWIRTSCHAFTLICHER FAHRBARER GERÄTETRÄGER MIT DIFFERENZIALLENKUNG UND HANGAUSGLEICH**

(71) Anmelder: Raptrac AG, 6466 Bauen (CH)
(72) Erfinder: Abt, Samuel, 5620 Bremgarten (CH); Theiler, Robert, 8143 Stallikon (CH); Schneebeli, René, 8911 Rifferswil (CH); Anderer, Nils, 6340 Baar (CH)
(74) Vertreter: Stolmár & Partner Intellectual Property GmbH

(57) **Zusammenfassung**

Die vorliegende Erfindung beansprucht einen landwirtschaftlichen fahrbaren Geräteträger mit Differenziallenkung und Hangausgleich (1) zum Bearbeiten von Agrarflächen an Hanglagen, wobei der Geräteträger (1) einen Rahmen (2), mindestens zwei Räder (3), wobei die mindestens zwei Räder (3) über eine Radaufhängung (21) mit dem Rahmen (2) verbunden sind, eine Kupplung (4) für mindestens ein landwirtschaftliches Gerät (5), mindestens ein Energievorratsbehälter (6) sowie eine Steuer- und Kontrolleinheit (7) umfasst, wobei die zwei Räder (3) nicht mit einer Achse miteinander verbunden sind, je ein Achselement mit Antriebsmotor (31) umfassen, wobei die Räder (3) durch die Achselemente mit Antriebsmotor (31) separat antriebbar sind, wodurch die Räder (3) Antriebsräder (3a) sind, und je eine Radwinkelverstellung (32) umfassen, wodurch die Räder (3) einzeln oder gemeinsam um einen Radeinschlag-Winkel (α, α'), relativ zur Fahrtrichtung, verstellbar sind, wodurch der Rahmen (2) des Geräteträgers (1) in Fahrtrichtung gerade und parallel zur Hanglage führbar ist.

Beansprucht wird auch ein Verfahren zum Bearbeiten von Agrarflächen an Hanglagen mit dem Geräteträger (1), sowie die Verwendung des Geräteträgers (1) zum Bearbeiten von Agrarflächen an Hanglagen.

## Beschreibung

Die vorliegende Erfindung bezieht sich auf einen landwirtschaftlichen fahrbaren Geräteträger mit Differenziallenkung und Hangausgleich zum Bearbeiten von Agrarflächen an Hanglagen, ein Verfahren zum Bearbeiten von Agrarflächen an Hanglagen mit dem Geräteträger, sowie die Verwendung des Geräteträgers.

In der heutigen Landwirtschaft ist die maschinelle Bearbeitung von Landflächen nicht mehr wegzudenken. In neuerer Zeit wird vermehrt auch auf Automatisierung gesetzt, um so den Personenaufwand zu reduzieren.

Während bei horizontalen Flächen diese mit grossen Geräten bearbeitet werden können, ist die Bewirtschaftung von hügeligen Landschaften herausfordernder, da diese oft kleinräumig sind sich schnell in Bezug auf die Hangneigung und Richtung ändern können. Entsprechend sind solche Geräte kleiner und deren Fahrweise langsamer. Dabei ist es in der Regel vorteilhaft, wenn die Bewirtschaftung entlang einer Höhenlinie durchgeführt werden kann. Daher wird in der Regel versucht, das Bergauf- und Bergabfahren mit den damit verbundenen zusätzlichen Herausforderungen zu vermeiden.

Während bei der automatisierten Bearbeitung von horizontalen Flächen die Steuerung der Geräte die Hauptherausforderung ist, kommt bei hügeligen Landschaften zusätzlich die Hangabtriebskraft hinzu, d.h. dass eine Komponente der Gewichtskraft, welche das Gerät auf einer schiefen Ebene hangabwärts zieht. Die Hangabtriebskraft ist insbesondere stark ausgeprägt bei Geräten, deren Antrieb sich nicht in der Mitte des Gerätes befindet, sondern im vorderen oder hinteren Teil des Geräts. Besonders ausgeprägt ist dieser Effekt bei Gerät mit zwei Antriebsräder und einem oder zwei ungelenkten Führungsräder. Um der Hangabtriebskraft entgegenzuwirken, muss das Gerät permanent bergauf fahren. Dies wiederum hat zur Folge, dass das Gerät als solches - und somit auch das zur Bearbeitung mitgeführte landwirtschaftliche Gerät - schief, d.h. mit einem Winkel, zur Fahrtrichtung ausgerichtet ist. Dies wiederum lässt keine präzise Bearbeitung der Bodenfläche zu. Auch sind die Antriebsräder und die mitgeführten landwirtschaftlichen Geräte einer erhöhten Abnutzung ausgesetzt und der benötigte Energieaufwand ist erhöht.

Daher ist es die Aufgabe der vorliegenden Erfindung, einen landwirtschaftlichen Geräteträger bereitzustellen, welcher an Hanglagen ohne Winkel zur Fahrtrichtung entlang einer Höhenlinie, Agrarflächen präzise bearbeiten kann. Der Geräteträger soll vielseitig einsetzbar, wendig sein, d.h. enge Kurven fahren, und idealerweise selbstfahrend betrieben werden. Dabei soll es auch möglich sein, dass der Geräteträger auch die gefahrene Trajektorie, d.h. den Pfad, entlang welchem der Geräteträger fährt, zu ändern, ohne dass sich die Ausrichtung zur Fahrtrichtung des Geräteträgers mit dem landwirtschaftlichen Gerät ändert, d.h. dass der Geräteträger möglichst immer parallel zur gefahrenen Trajektorie ausgerichtet ist.

Diese herausfordernde Aufgabe wurde überraschenderweise mit dem landwirtschaftlichen fahrbaren Geräteträger (1) mit Differenziallenkung und Hangausgleich gemäss Anspruch 1 gelöst.

Beansprucht wird auch Verfahren zum Bearbeiten von Agrarflächen an Hanglagen mit dem erfindungsgemässen Geräteträger (1) nach Anspruch 10.

Zudem wird auch die Verwendung des erfindungsgemässen Geräteträgers (1) nach Anspruch 12 beansprucht.

Die vorliegende Erfindung weist eine Vielzahl an Vorteilen auf. So kann die komplexe Aufgabe gelöst werden, sodass der Geräteträger (1) mit einer Vielzahl an unterschiedlichen landwirtschaftlichen Geräten (5) an Hanglagen ohne die Ausrichtung des Geräteträger (1) zur Fahrtrichtung zu ändern. So können Agrarflächen entlang einer Höhenlinie präzise bearbeiten werden, wobei die landwirtschaftlichen Geräte (5) entlang der Fahrtrichtung ausgerichtet sind und nicht von der Trajektorie abweichen. Dabei kann die Hanglage bis zu 30° oder mehr geneigt sein, ohne dass der Geräteträger (1) mit Rahmen (2) von der horizontalen Ausrichtung und der gefahrenen Trajektorie abweicht.

Der Geräteträger (1) kann auch aufgrund der Radwinkelverstellung (32) die gefahrene Trajektorie auf einfache Art und Weise parallel verschieben, ohne dass sich die Ausrichtung der Fahrtrichtung des Geräteträgers (1) mit dem landwirtschaftlichen Gerät (5) ändert, d.h. dass der Geräteträger (1) und das Gerät (5) bleiben immer parallel zur gefahrenen Trajektorie ausgerichtet.

Da die Antriebsräder (3, 3a) separat angetrieben werden, kann sich der Geräteträger (1) sogar an Ort um die eigene Achse drehen. Somit ist er äusserst wendig, kann enge Kurven fahren und ist vielseitig einsetzbar. Auch kann er so ausgerüstet werden, dass er manuell gesteuert, oder selbstfahrend betrieben werden kann.

Aufgrund der einfachen Konstruktion ist der Geräteträger (1) robust, preiswert in der Herstellung und weist ein geringes Gewicht auf, was die Bodenverdichtung reduziert.

### Der Geräteträger (1)

Der erfindungsgemässe landwirtschaftliche fahrbare Geräteträger mit Differenziallenkung und Hangausgleich (1) zum Bearbeiten von Agrarflächen an Hanglagen umfasst einen Rahmen (2), mindestens zwei Räder (3), wobei die mindestens zwei Räder (3) über eine Radaufhängung (21) mit dem Rahmen (2) verbunden sind, eine Kupplung (4) für mindestens ein landwirtschaftliches Gerät (5), mindestens ein Energievorratsbehälter (6) sowie eine Steuer- und Kontrolleinheit (7). Dabei ist der Geräteträger (1) besonders geeignet zum Bearbeiten von Agrarflächen an Hanglagen.

Erfindungswesentlich ist, dass beim Geräteträger (1) die zwei Räder (3)
- nicht mit einer Achse miteinander verbunden sind. Dabei wird unter Achse eine direkte, lineare Verbindung der Räder (3) verstanden;
- je ein Achselement mit Antriebsmotor (31) umfassen, wobei die Räder (3) durch die Achselemente mit Antriebsmotor (31) separat antriebbar sind, wodurch die Räder (3) Antriebsräder (3a) sind. Dadurch weist der Geräteträger (1) eine Differenziallenkung auf. So kann sich der Geräteträger (1) auch an Ort um die eigene vertikale Achse drehen und somit äusserst kleine Radien fahren. Demzufolge ist der Geräteträger (1) äusserst wendig; und
- je eine Radwinkelverstellung (32) umfassen, wodurch die Räder (3) einzeln oder gemeinsam um einen Radeinschlag-Winkel (α, α'), relativ zur Fahrtrichtung, verstellbar sind, wodurch der Rahmen (2) des Geräteträgers (1) in Fahrtrichtung gerade und parallel, d.h. waagrecht, zur Hanglage führbar ist, wodurch der Geräteträger (1) den beanspruchten Hangausgleich umfasst.

Die zwei Räder (3), insbesondere die - typischerweise zwei - Antriebsräder (3a), sind bevorzugt zueinander parallel angeordnet. Umfasst der Geräteträger (1) zwei Räder (3), dient hilfeicherweise das mindestens eine landwirtschaftliche Gerät (5) zur Stabilisierung des Geräteträgers (1), sodass dieser nicht kippt. Alternativ umfasst der Geräteträger (1) mindestens ein weiteres Rad (3) in Form eines weiteren Antriebsrads (3a) und/oder eines nicht angetriebenen Führungsrad (3b). Dabei kann das Führungsrad (3b) frei drehbar sein und dient zur Stabilität des Geräteträgers (1).

Dabei bildet das Achselement mit Antriebsmotor (31) die Radachse des Rads (3). Die Radwinkelverstellung (32) ist in oder an der Radachse des Rads (3), und somit am Achselement (31) angeordnet und verbindet dieses mit der Radaufhängung (21).

**In** einer bevorzugten Ausführungsform des Geräteträgers (1)
- ist der Rahmen (2) oberhalb der Räder (3) angeordnet. Dadurch kann das Gerät (5) bequem zwischen und/oder kurz vor oder hinter den Rädern (3) angeordnet werden, was einer optimalen Bearbeitung der Fläche dient,
- umfassen die mindestens zwei Räder (3) zwei, bevorzugt parallel angeordnete, Antriebsräder (3a) und mindestens ein, bevorzug zwei, Führungsrad (3b), und/oder
- ist der mindestens eine Energievorratsbehälter (6) eine Batterie oder ein Akku, und das Achselement mit Antriebsmotor (31) ein elektrisch angetriebenes Achselement mit Antriebsmotor (31). Dadurch kann der Geräteträger (1) besonders umweltfreundlich und leise betrieben werden.

In einer anderen bevorzugten Ausführungsform des Geräteträgers (1)
- ist das Achselement mit Antriebsmotor (31) in oder neben der Radachse des Rads (3) angeordnet, wobei das Achselement mit Antriebsmotor (31) mit der Mitte der Felge (33) des Rads (3) verbunden ist,
- ist die Radwinkelverstellung (32) in oder an der Radachse des Rads (3), oder im Bereich des Rahmens (2) angeordnet, wo die Radaufhängung (21) mit dem Rahmen (2) verbunden ist, und/oder
- beträgt der Radeinschlag-Winkel (α, α') zur Radwinkelverstellung (32) der Räder (3) bis ±45°, bevorzugt bis ±30°, insbesondere bis ±15°.

Diese Anordnungen erlauben eine besonders platzsparende und leichte Bauweise mit einer optimalen Gewichtsverteilung, wodurch die Bodenverdichtung gering bleibt. Zudem erlaubt der grosszügige Radeinschlag-Winkel (α, α') auch das Bearbeiten von Agrarflächen in steiler Hanglage, was bis jetzt nicht in diesem Ausmass möglich war.

Die Radwinkelverstellung (32) des Geräteträgers (1) ist typischerweise über einen linearen oder rotativen Antrieb verstellbar. Bevorzugt die Radwinkelverstellung (32) in oder an der Radachse des Rads (3) angeordnet und mit der Radaufhängung (21) fest verbunden, wobei die Radwinkelverstellung (32)
- einen Verstellmotor (321),
- eine Gewindespindel (322), welche durch den Verstellmotor (321) drehbar antriebbar ist,
- ein Verbindungselement (325), welches das Achselement mit Antriebsmotor (31) mit der Gewindespindel (322) verbindet, sowie
- einen Winkelsensor (326) zur Messung des Radeinschlag-Winkels (α, α') umfasst, wobei durch Betätigen des Verstellmotors (321) das Verbindungselement (325) entlang der Gewindespindel (322) führbar und das Rad (3) mit dem Winkel (α, α') bewegbar ist. Somit kann die Radwinkelverstellung (32) einfach hergestellt und gewartet werden. Zudem weist sie keine komplexen Elemente auf.

Das Verbindungselement (325) der Radwinkelverstellung (32) ist bevorzugt
- am Achselement mit Antriebsmotor (31) mittels Gelenk oder Lagerpunkt befestigt, und/oder
- auf einer Gewindespindel (322) führbar und über die Gewindespindel (322) linear verstellbar.

Dies erlaubt eine einfache, effiziente Konstruktion mit welcher auch grössere Radeinschlag-Winkel (α, α') auf einfache Art und Weise eingestellt werden können.

In einer bevorzugten Ausführungsform des Geräteträgers (1)
- ist dieser autonom, typischerweise mittels Steuer- und Kontrolleinheit (7) gesteuert, oder manuell, beispielsweise mittels Konsole gesteuert, fahrbar, und/oder
- umfasst die Steuer- und Kontrolleinheit (7)
   o eine programmierbare Steuerung, beispielsweise eine speicherprogrammierbare Steuerung (SPS) oder eine C++-Steuerung;
   o mindestens eine Sende- und Empfangseinheit (71) zum Senden und Empfangen von Daten, insbesondere Geodaten und/oder Steuerdaten der manuell gesteuerten Konsole. Dabei umfasst die Sende- und Empfangseinheit (71) bevorzugt auch eine Empfangseinheit (71) mit Antennen für den Funk, insbesondere zum Empfangen der Steuerimpulse der Steuerkonsole, und Mobilfunk, insbesondere für die Datenübertragung, beispielsweise zur Verfolgung von Geräten und zur Vergabe von Fahraufträgen per App auf einem mobilen Gerät wie Tablet oder Smartphone;
   o mindestens ein Hodometer (72) zur Bestimmung der gefahrenen Distanz und der aktuellen Geschwindigkeit,
   o mindestens eine GNSS-Antenne (74) mit Auswerteeinheit von GNSS-Signalen, d.h. ein GNSS-Modul, zum Empfangen von Signalen eines globalen satellitengestützten Navigationssystems (GNSS), wie beispielsweise GPS, ein Differential Global Positioning System (DGPS) und/oder Echtzeitkinematik (RTK), und/oder
   o mindestens ein Kamera-System (75), beispielsweise zum Abgleichen von Gelände-Fixpunkten und/oder zum Erkennen von Bodenelementen wie Pflanzen in Saatreihen.
Die so ausgestattete Steuer- und Kontrolleinheit (7) eignet sich besonders gut für die autonome Fahrweise, zumal damit die Position und Lage vom Geräteträger (1) festgestellt und autonom gesteuert werden kann, wobei hierzu bevorzugt die Steuer- und Kontrolleinheit (7) sowohl mindestens eine GNSS-Antenne (74) mit Auswerteeinheit wie auch mindestens ein Kamera-System (75) umfasst.

Der erfindungsgemässe Geräteträger (1) kann bevorzugt mittels der Radwinkelverstellung (32) eine zur ursprünglich gefahrenen Trajektorie parallel verschobene Trajektorie, und somit eine Querverschiebung, anfahren, wodurch der Rahmen (2), und somit der Geräteträger (1) und das Gerät (5), während der Querverschiebung jederzeit zur Fahrtrichtung parallel, d.h. in allgemeiner Fahrtrichtung, ausgerichtet bleibt.

Die Steuer- und Kontrolleinheit (7) des Geräteträger (1) umfasst bevorzugt das mindestens eine Kamera-System (75), wobei mittels Steuer- und Kontrolleinheit (7) und Kamera-System (75) die Querverschiebung des Geräteträgers (1) parallel zur, d.h. in, Fahrtrichtung optimal auf Bodenelemente ausrichtbar ist, wobei das Kamera-System (75) bevorzugt zum Erkennen von Bodenelementen wie Pflanzen in Saatreihen geeignet ist. Somit kann der Geräteträger (1) automatisch die Position anpassen, auch wenn Saatreihen plötzlich seitlich um beispielsweise 20 cm verschoben sind.

Der erfindungsgemässe Geräteträger (1) ist bevorzugt über die Kupplung (4) mit einem landwirtschaftlichen Gerät (5) verbunden ist, wobei das Gerät (5) bevorzugt
- ein Gerät zur Bodenbearbeitung, zum Säen und/oder Pflanzen, zur Kulturpflege, zum Ernten, und/oder zum Transportieren; und/oder
- eine Umkehrfräse, Kreiselegge, ein Tiefenlockerer, Sägerät, Pflanzgerät, Hackgerät, Geräte zur Unkrautregulierung, Mulch- und/oder Streifenmulchaggregate, Mähbalken und/oder -werke, Geräte zur Schädlingsbekämpfung, Sprüh- und/oder Bewässerungsgeräte, Erntegeräte, Palettenaufnahme, und/oder eine Transportfläche
umfasst. Somit ist der Geräteträger (1) mit geeigneten Geräten (5) äusserst - und insbesondere an Hanglagen - vielseitig einsetzbar.

### Das Verfahren

Beim erfindungsgemässen Verfahren zum Bearbeiten von Agrarflächen an Hanglagen mit dem erfindungsgemässen Geräteträger (1), wobei der Geräteträger (1) über die Kupplung (4) mit einem landwirtschaftlichen Gerät (5) verbunden ist, wird die Position des Geräteträgers (1) durch Steuerung der Geschwindigkeit der Räder (3) mittels Achselement mit Antriebsmotor (31), und somit mittels Differenziallenkung, und Einstellen des Radeinschlag-Winkels (α, α') mittels Radwinkelverstellung (32), und somit mittels Hangausgleich, so eingestellt, dass der Rahmen (2), und somit der Geräteträger (1), sowie das Gerät (5), in Fahrtrichtung gerade und parallel zur Hanglage oder zur vorgegebenen Fahrtrichtung führbar sind. Dadurch können auch Agrarflächen an Hanglagen, welche einen Winkel β von bis zu 30° oder mehr, bezogen auf eine waagrechte Ebene, aufweisen, problemlos - und gegebenenfalls auch autonom - bearbeitet werden.

Dabei wird die Position des fahrenden Geräteträgers (1) bevorzugt manuell, typischerweise mittels Konsole und gegebenenfalls mittels Fahrassistenz, gesteuert, oder mittels Steuer- und Kontrolleinheit (7) selbstfahrend, insbesondere autonom fahrend, gesteuert.

### Die Verwendung

Der erfindungsgemässe Geräteträger (1) wird erfindungsgemäss zum Bearbeiten von Agrarflächen an Hanglagen und/oder an flachen, insbesondere kleinräumigen, Lagen verwendet, wobei die Radwinkverstellung (32), d.h. der Hangausgleich, bei flachen Lagen eine untergeordnete Rolle spielt. Aufgrund der Differenziallenkung des Geräteträgers eignet sich dieser jedoch hervorragend für kleinräumige Agrarflächen, unabhängig ob an Hanglagen oder auf flacher Ebene.

Dabei können mit dem Geräteträger (1) pro Stunde beispielsweise bis 5 ha oder mehr, bevorzugt bis 2 ha oder mehr, insbesondere bis 0.5 ha oder mehr, Agrarflächen, insbesondere an Hanglagen und/oder kleinräumigen flachen Lagen, bearbeitet werden. Dadurch ist der Geräteträger (1) optimal für kleinräumiges, hügeliges Gelände einsetzbar.

Zudem kann der Geräteträger (1) sogar an Hanglagen eingesetzt werden, welche einen Winkel β von bevorzugt bis zu 30° oder mehr, bezogen auf eine waagrechte Ebene, aufweisen. Dies unterstreicht die vielseitige Einsetzbarkeit des Geräteträgers (1), beispielsweise in kleinräumigem, hügeligem Gelände.

### Bezugszeichenliste

- 1: Landwirtschaftlicher fahrbarer Geräteträger mit Differenziallenkung und Hangausgleich (1)
- 2: Rahmen (2)
21 Radaufhängung (21), welche die Räder (3) mit dem Rahmen (2) verbinden
- 3: mindestens zwei Räder (3)
31 Achselement mit Antriebsmotor (31) zum Antreiben der Räder (3)
32 Radwinkelverstellung (32)
321 Verstellmotor (321) der Radwinkelverstellung (32)
322 Gewindespindel (322)
325 Verbindungselement (325), beispielsweise ein Schwenkhebel,
326 Winkelsensor (326) zur Messung des Radeinschlag-Winkels (α, α')
33 Felge (33)
3a Antriebsrad (3a), d.h. Rad (3) mit Achselement mit Antriebsmotor (31)
3b Führungsrad (3b)
- 4: Kupplung (4), beispielsweise ein landwirtschaftlicher Dreipunkt-Kraftheber für mindestens ein landwirtschaftliches Gerät (5)
- 5: landwirtschaftliches Gerät (5)
- 6: Energievorratsbehälter (6), insbesondere eine Batterie
- 7: Steuer- und Kontrolleinheit (7)
71 Sende- und Empfangseinheit (71)
72 Hodometer (72)
74 GNSS-Antenne (74) mit Auswerteeinheit
75 Kamera-System (75)
- α, a': Radeinschlag-Winkel (α, α')
- β: Hangneigung, d.h. Neigung der schiefen Ebene (β)

Im Folgenden werden nicht-limitierende, bevorzugte Ausführungsformen des erfindungsgemässen landwirtschaftlichen fahrbaren Geräteträgers mit Differenziallenkung und Hangausgleich (1) anhand der nachfolgenden Zeichnungen beschrieben, die nicht einschränkend auszulegen sind und als Bestandteil der Beschreibung verstanden werden:

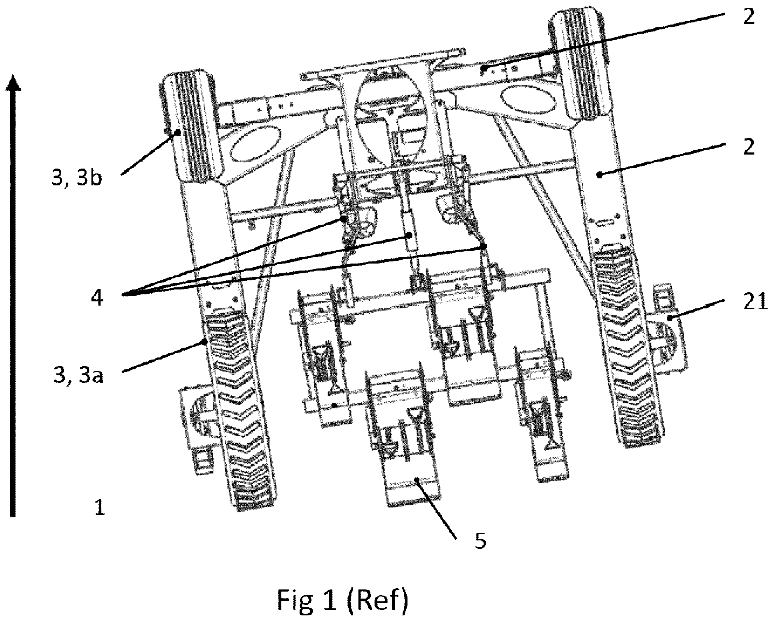

- Fig. 1: zeigt einen Geräteträger ohne Lenkkorrektur der Differenziallenkung und ohne Hangausgleich, und somit einen Referenz-Geräteträger. Soll der Geräteträger entlang eines Hangs in Fahrtrichtung des Pfeils geführt werden, weist der Geräteträger einen Drift nach unten, in Fig. 1 Richtung links, auf. Denn die Hangabtriebskraft zieht beispielhaft die vorderen, ungeführten Räder den Hang hinunter.

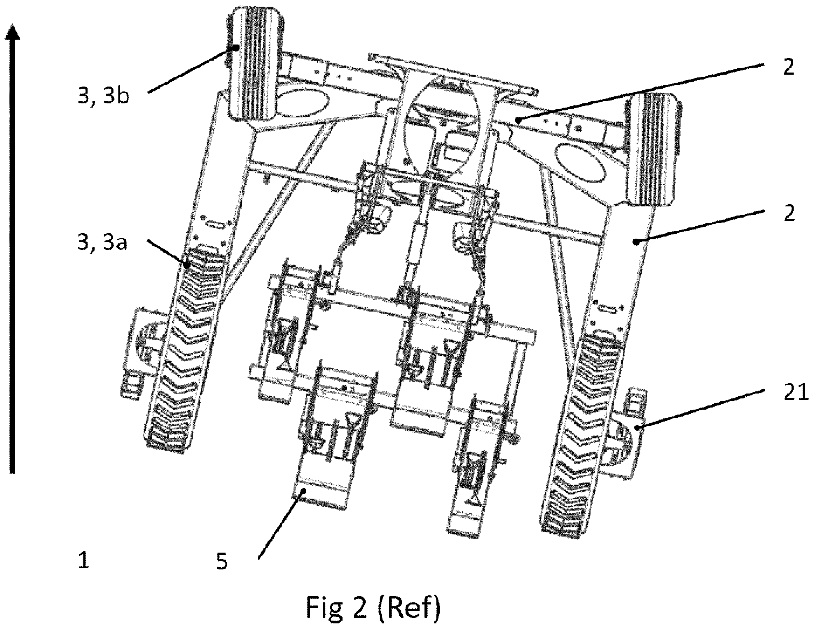

- Fig. 2: zeigt den Geräteträger von Fig. 1, welcher, am Hang in Pfeilrichtung entlangfahrend, durch die Lenkkorrektur der Differenziallenkung permanent leicht nach oben ausgerichtet ist, um der Hangabtriebskraft entgegenzuwirken. Durch den dadurch entstehenden Schlupf kann der Geräteträger in einer Hanglage nur schräg entlang einer Höhenkurve fahren. Dabei stehen der Rahmen und das befestigte Geräte permanent schräg gegenüber der Fahrtrichtung. Somit kann eine Agrarfläche nicht exakt in der Ausrichtung der Fahrspur bearbeitet werden. Der Abstand zwischen den Saatlinien muss vergrössert werden, da das Gerät schräg zwischen den Saatlinien steht. Wegen entstehenden Schärkräften am befestigten Gerät können Arbeitsschritte gar verunmöglicht werden.

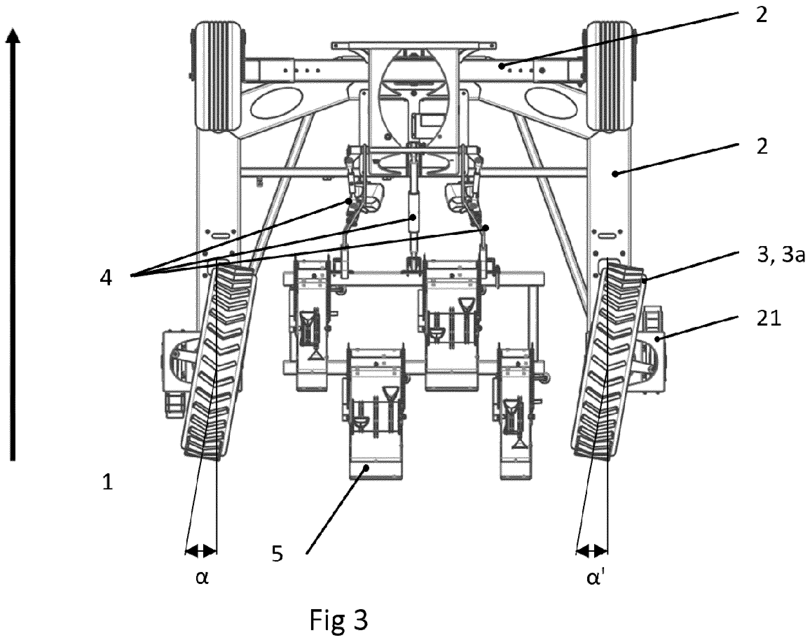

- Fig. 3: zeigt den erfindungsgemässen Geräteträger (1), dessen Rahmen (2) ganz in Richtung der mit dem Pfeil angedeuteten Fahrtrichtung, an einer Hanglage typischerweise entlang einer Höhenkurve, ausgerichtet ist. Anstelle des Rahmens (2) sind die Antriebsräder (3a) nach oben ausgerichtet, d.h. sie fahren leicht bergwärts und kompensieren damit den Schlupf, welcher hangabwärts wirkt. Da die Antriebsräder (3a) unabhängig voneinander per Differenziallenkung gesteuert werden, kann der Geräteträger (1) auf einfache Art und Weise auch Kurven fahren und die Fahrtrichtung anpassen. Da der Rahmen (2) des Geräteträgers (1) parallel entlang einer Höhenkurve fahrbar ist, wird auch das am Geräteträger (1) angebrachte Gerät (5) exakt entlang der Höhenkurve geführt. Dadurch kann die Agrarfläche - beispielsweise zwischen Saatreihen - optimal bearbeitet werden und das angebrachte Gerät (5) ist jederzeit parallel zur Fahrtrichtung ausgerichtet.

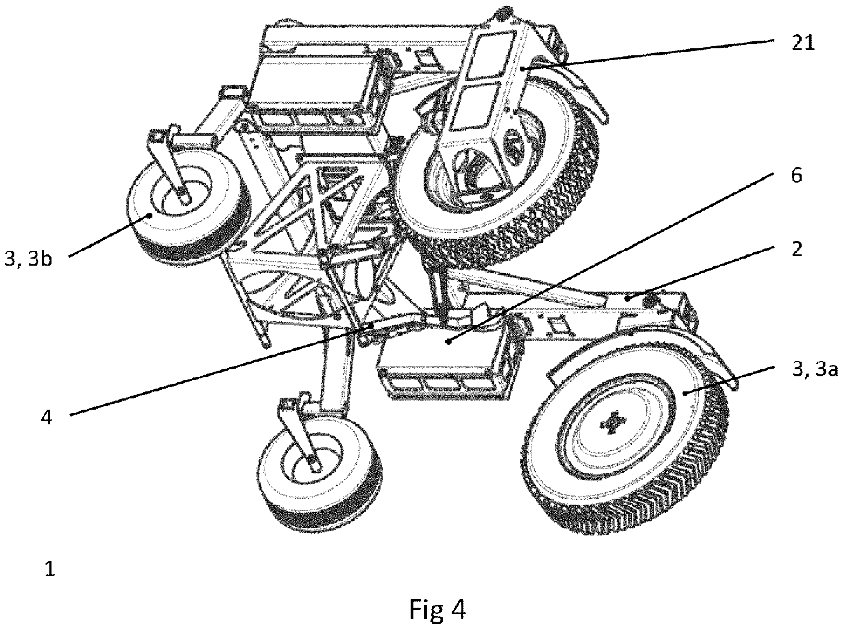

- Fig. 4: zeigt die seitliche und untere Seite des Geräteträger (1) ohne Gerät (5). Die Antriebsräder (3, 3a) sind einzeln mittels Radaufhängung (21) mit dem Rahmen (2) verbunden. Die Räder (3, 3a) werden einzeln angetrieben und gelenkt. Die Führungsräder (3, 3b) im beispielhaft vorderen Bereich des Geräteträgers (1) dienen zur Stabilität des Geräteträgers (1). Sie sind weder geführt noch weisen sie einen Antrieb auf. Auf beiden Seiten des Rahmens (2) sind Energievorratsbehälter (6), beispielsweise Batterien oder Akku's, angeordnet.

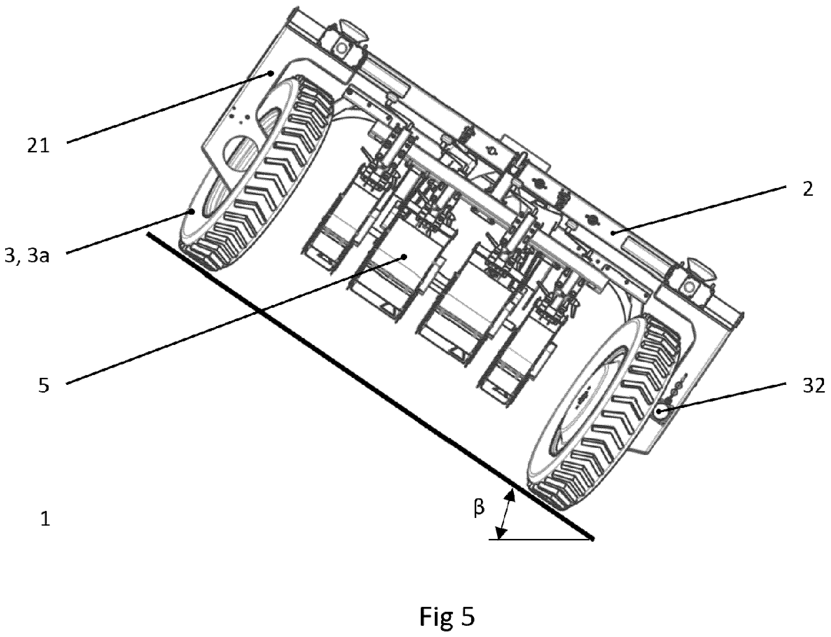

- Fig. 5: zeigt den Geräteträger (1) am Hang, d.h. entlang einer schiefen Ebene fahrend. Dabei weist der Hang, d.h. die schiefe Ebene, eine Neigung mit Winkel β auf. Der Geräteträger (1) kann entlang eines Hangs mit einer Neigung mit Winkel β von beispielsweise bis zu 30° oder mehr fahren, wobei der Rahmen (2) von der horizontalen Ausrichtung nicht abweicht.

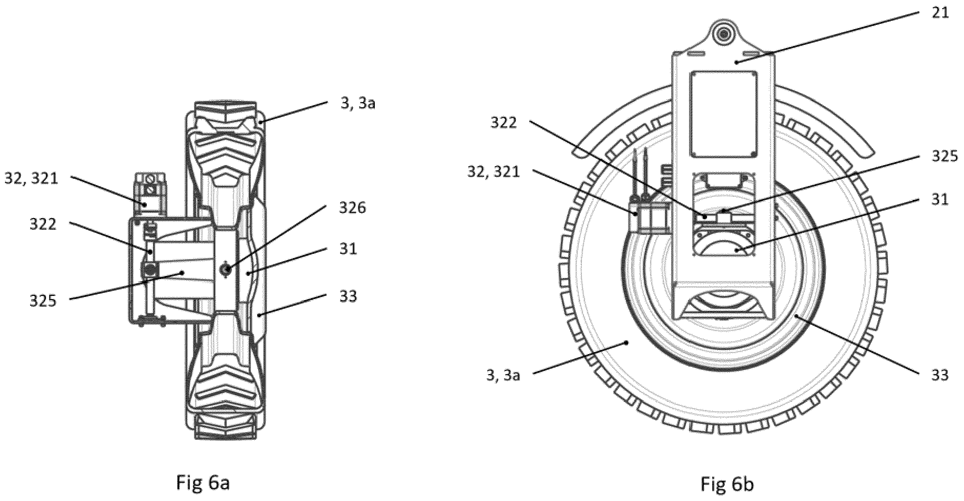

- Fig. 6a: zeigt von oben das Antriebsrad (3, 3a) mit Achselement mit Antriebsmotor (31), welcher an der Felge (33) befestigt ist und das Rad (3, 3a) antreibt. Die Radwinkelverstellung (32) mit Verstellmotor (321) ist mit dem Achselement mit Antriebsmotor (31) verbunden. Mittels Drehen der Gewindespindel (322) kann das Verbindungselement (325), welches das Achselement mit Antriebsmotor (31) mit der Gewindespindel (322) verbindet, entlang der Längsrichtung der Gewindespindel (322) verschoben werden. Dadurch ändert sich der Radeinschlag-Winkel (α, α') und das Rad (3, 3a) weist in eine andere Richtung als die Längsrichtung des Rahmens (2) des Geräteträgers (1) aus. In Fig. 6a beträgt der Radeinschlag-Winkel (α, α') 0, d.h. das Rad (3, 3a) weist die gleiche Ausrichtung auf wie die Längsrichtung des Rahmens (2). Somit fährt der Geräteträger (1) auf horizontaler Ebene geradeaus.
- Fig. 6b: zeigt das Antriebsrad (3, 3a) mit Achselement mit Antriebsmotor (31) der Fig. 6a von der Seite. Das Achselement mit Antriebsmotor (31) ist sowohl an der Felge (33) des Rads (3, 3a), als auch an der Radaufhängung (21) befestigt, welche das Rad (3) mit dem Rahmen (2) verbindet. Das Verbindungselement (325) verbindet das Achselement mit Antriebsmotor (31) mit der Radwinkelverstellung (32). Durch Betätigen des Verstellmotors (321) der Radwinkelverstellung (32) wird das Verbindungselement (325) entlang der Gewindespindel (322) bewegt, wodurch sich der Radeinschlag-Winkel (α, α') des Rads (3, 3a) verändert. In Fig. 6b beträgt der Radeinschlag-Winkel (α, α') 0, d.h. das Rad (3, 3a) und dessen Drehrichtung ist parallel zur Längsrichtung des Rahmens (2), und ist somit wie in Fig. 6a dargestellt.

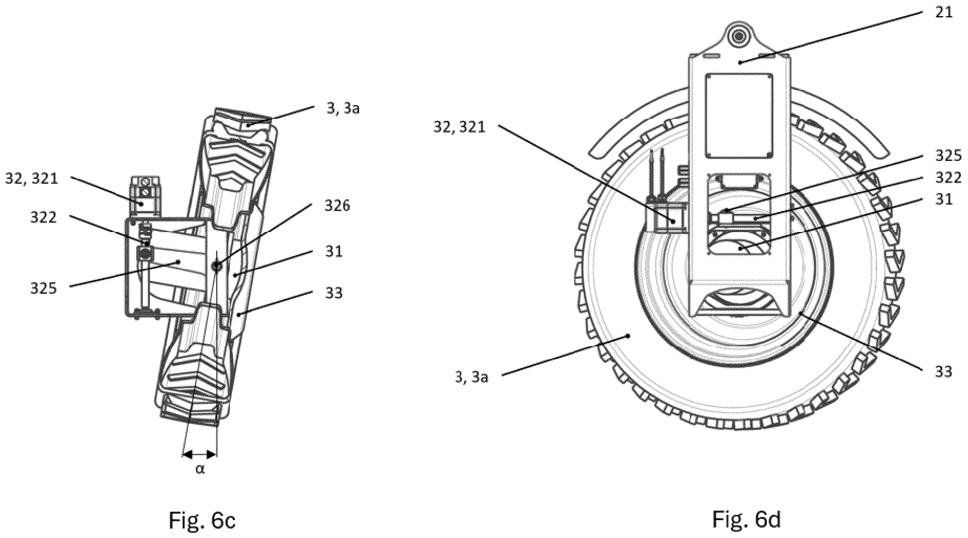

- Fig. 6c: zeigt von oben das Antriebsrad (3, 3a) von Fig. 6a, wobei das Rad (3, 3a) den maximalen Einschlag aufweist, d.h. der Radeinschlag-Winkel (α, α') ist deutlich grösser als 0. Somit liegt die Fahrtrichtung des Geräteträgers (1) auf einer horizontaler Ebene, entsprechend des eingestellten Radeinschlag-Winkel (α, α'), in einem Winkel zum Rahmen (2). An einem Hang mit entsprechender Hangneigung β sind jedoch Fahrtrichtung und Rahmen (2) zu einander parallel ausgerichtet.
- Fig. 6d: zeigt das Antriebsrad (3, 3a) der Fig. 6b, wobei das Verbindungselement (325) an einem Ende der Gewindespindel (322) ist. Dadurch weist das Rad (3, 3a) den maximalen Einschlag auf, d.h. der Radeinschlag-Winkel (α, α') ist deutlich grösser als 0, und das Rad (3, 3a) weist die gleiche Ausrichtung auf wie in Fig. 6c dargestellt.

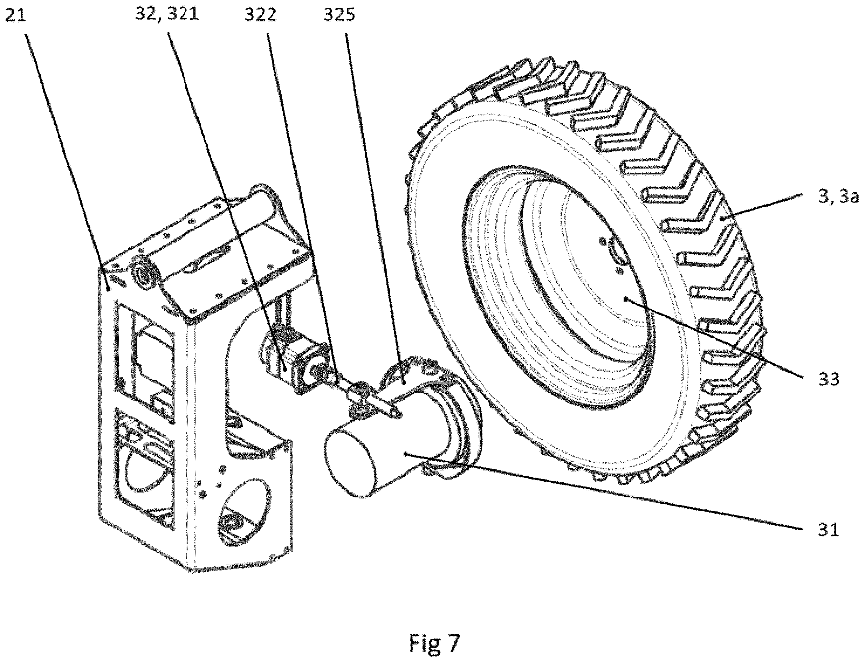

- Fig. 7: zeigt die Explosionsansicht des Rads (3, 3a) mit der Felge (33), dem Achselement mit Antriebsmotor (31), welcher an der Felgenmitte befestigt wird, die Radwinkelverstellung (32) mit Verstellmotor (321), Gewindespindel (322) und dem Verbindungselement (325), welche die Radwinkelverstellung mit dem Achselement mit Antriebsmotor (31) verbindet. Das Achselement mit Antriebsmotor (31) und die Radwinkelverstellung (32) ist an der Radaufhängung (21) befestigt.

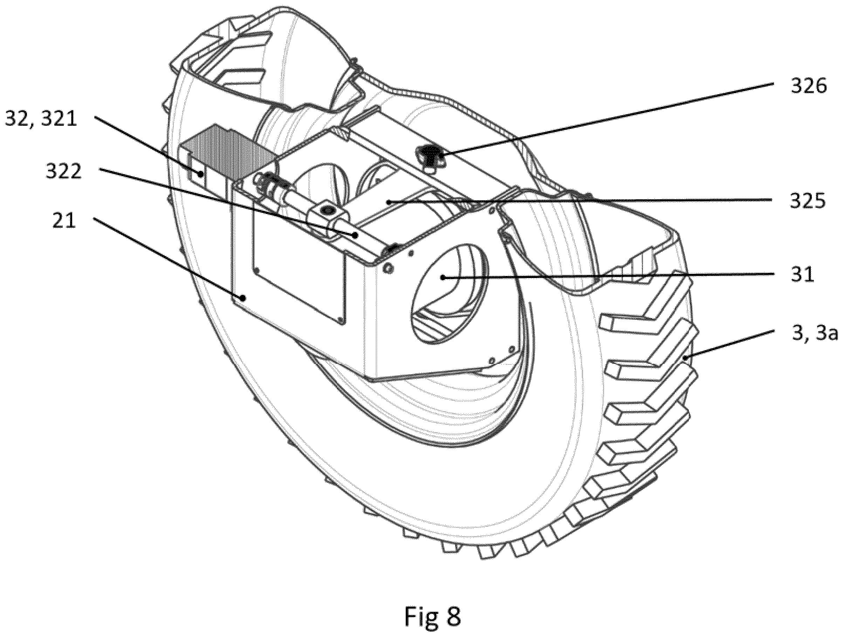

- Fig. 8: zeigt einen Querschnitt des Rads (3, 3a) mit Felge (33), dem Achselement mit Antriebsmotor (31), der Radwinkelverstellung (32) mit Verstellmotor (321), Gewindespindel (322) und dem Verbindungselement (325). Der Winkelsensor (326) zur Messung des Radeinschlag-Winkels (α, α') ist beispielhaft an der Radaufhängung (21) befestigt.

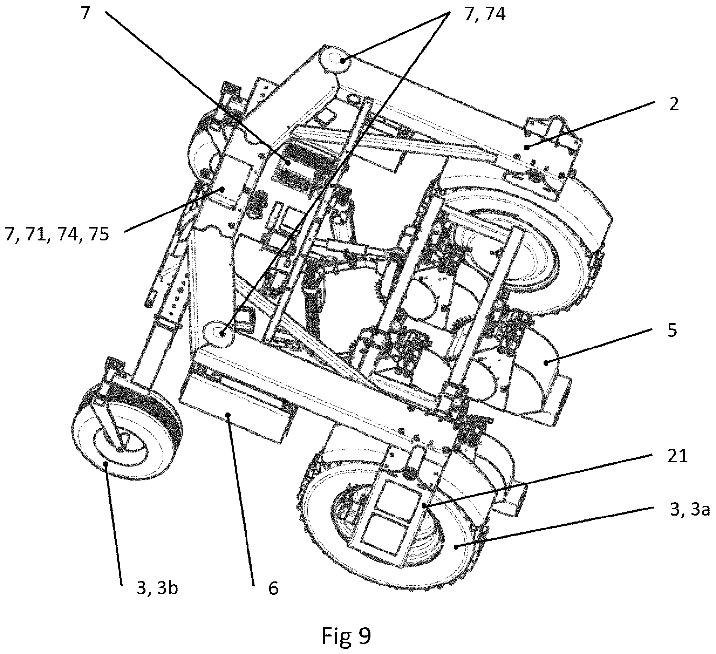

- Fig. 9: zeigt den Geräteträger (1) mit der Steuer- und Kontrolleinheit (7), welche auf beiden Seiten des Rahmens (2) je eine GNSS-Antenne (74) mit Auswerteeinheit aufweist. Letztere ist beispielhaft - zusammen mit anderen Elementen der Steuer und Kontrolleinheit (7) in der Mitte des vorderen Bereichs des Geräteträgers (1) angeordnet. Dort befindet sich beispielhaft auch der Funkempfänger (71) mit Antenne, sowie ein Mobilfunkempfänger mit Antenne.

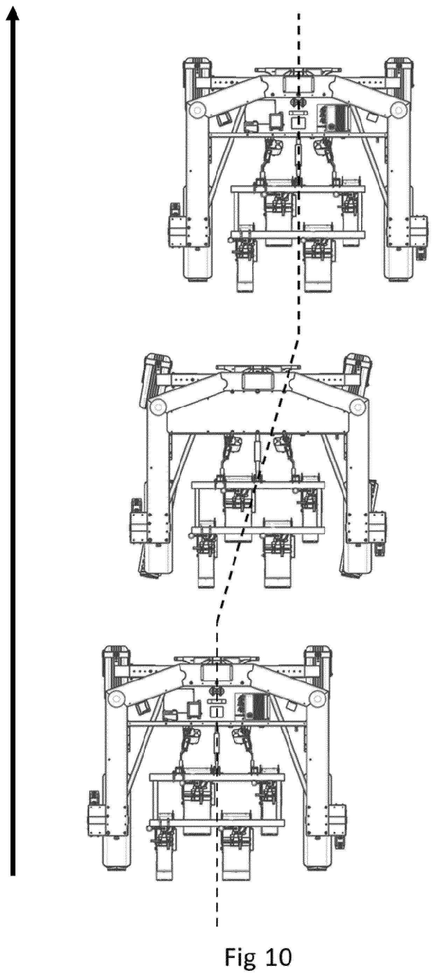

- Fig. 10: zeigt wie der Geräteträger (1) mittels Radwinkelverstellung eine Offsetposition, d.h. eine Querverschiebung des Geräteträgers (1) ohne Änderung der Ausrichtung der Fahrtrichtung, gegenüber der ursprünglich gefahrenen Trajektorie - in Richtung des Pfeils - fährt. Dabei bleibt der Rahmen (2) und somit der Geräteträger (1) immer parallel zur gefahrenen Trajektorie ausgerichtet.
Dadurch kann beispielhaft die seitliche Position - ohne Änderung der Fahrtrichtung - geändert werden. Dies ist besonders hilfreich, wenn beispielsweise bei einer Anbaufläche die Saatreihen plötzlich seitlich versetzt sind. Ist die Steuer- und Kontrolleinheit (7) mit einem Kamera-System (75) zum Erkennen von Bodenelementen wie Pflanzen in Saatreihen verbunden, kann der Geräteträger (1) mittels einer solchen Querverschiebung und einstellbarer Radwinkelverstellung (32) ohne Änderung der Trajektorie optimal und permanent auf die Saatreihen, und somit Bodenelemente, ausgerichtet werden.

## Patentansprüche

1. Landwirtschaftlicher fahrbarer Geräteträger mit Differenziallenkung und Hangausgleich (1) zum Bearbeiten von Agrarflächen an Hanglagen, wobei der Geräteträger (1) einen Rahmen (2), mindestens zwei Räder (3), wobei die mindestens zwei Räder (3) über eine Radaufhängung (21) mit dem Rahmen (2) verbunden sind, eine Kupplung (4) für mindestens ein landwirtschaftliches Gerät (5), mindestens ein Energievorratsbehälter (6) sowie eine Steuer- und Kontrolleinheit (7) umfasst, **dadurch gekennzeichnet, dass** die zwei Räder (3)
- nicht mit einer Achse miteinander verbunden sind,
- je ein Achselement mit Antriebsmotor (31) umfassen, wobei die Räder (3) durch die Achselemente mit Antriebsmotor (31) separat antriebbar sind, wodurch die Räder (3) Antriebsräder (3a) sind, und
- je eine Radwinkelverstellung (32) umfassen, wodurch die Räder (3) einzeln oder gemeinsam um einen Radeinschlag-Winkel (α, α'), relativ zur Fahrtrichtung, verstellbar sind, wodurch der Rahmen (2) des Geräteträgers (1) in Fahrtrichtung gerade und parallel zur Hanglage führbar ist.

2. Geräteträger (1) nach Anspruch 1, **dadurch gekennzeichnet, dass**
- der Rahmen (2) oberhalb der Räder (3) angeordnet ist,
- die mindestens zwei Räder (3) zwei Antriebsräder (3a) und mindestens ein Führungsrad (3b) umfassen, und/oder
- der mindestens eine Energievorratsbehälter (6) eine Batterie oder ein Akku, und das Achselement mit Antriebsmotor (31) ein elektrisch angetriebenes Achselement mit Antriebsmotor (31) ist.

3. Geräteträger (1) nach Anspruch 1 oder 2, **dadurch gekennzeichnet, dass**
- das Achselement mit Antriebsmotor (31) in oder neben der Radachse des Rads (3) angeordnet ist, wobei das Achselement mit Antriebsmotor (31) mit der Mitte der Felge (33) des Rads (3) verbunden ist,
- **die Radwinkelverstellung** (32) in oder an der Radachse des Rads (3), oder im Bereich des Rahmens (2) angeordnet ist, wo die Radaufhängung (21) mit dem Rahmen (2) verbunden ist, und/oder
- der Radeinschlag-Winkel (α, α') zur Radwinkelverstellung (32) der Räder (3) bis ±45°, bevorzugt bis ±30°, insbesondere bis ±15°, beträgt.

4. Geräteträger (1) nach mindestens einem der Ansprüche 1 bis 3, **dadurch gekennzeichnet, dass** die Radwinkelverstellung (32) in oder an der Radachse des Rads (3) angeordnet ist und mit der Radaufhängung (21) fest verbunden ist, wobei die Radwinkelverstellung (32)
- einen Verstellmotor (321),
- eine Gewindespindel (322), welche durch den Verstellmotor (321) drehbar antriebbar ist,
- ein Verbindungselement (325), welches das Achselement mit Antriebsmotor (31) mit der Gewindespindel (322) verbindet, sowie
- einen Winkelsensor (326) zur Messung des Radeinschlag-Winkels (α, α') umfasst, wobei durch Betätigen des Verstellmotors (321) das Verbindungselement (325) entlang der Gewindespindel (322) führbar und das Rad (3) mit dem Winkel (α, α') bewegbar ist.

5. Geräteträger (1) nach Anspruch 4, **dadurch gekennzeichnet, dass** das Verbindungselement (325)
- am Achselement mit Antriebsmotor (31) mittels Gelenk oder Lagerpunkt befestigt ist, und/oder
- auf einer Gewindespindel (322) führbar und über die Gewindespindel (322) linear verstellbar ist.

6. Geräteträger (1) nach mindestens einem der Ansprüche 1 bis 5, **dadurch gekennzeichnet, dass**
- der Geräteträger (1) autonom oder manuell, beispielsweise mittels Konsole gesteuert, fahrbar ist, und/oder
- die Steuer- und Kontrolleinheit (7)
o eine programmierbare Steuerung;
o mindestens eine Sende- und Empfangseinheit (71) zum Senden und Empfangen von Daten, insbesondere Geodaten und/oder Steuerdaten der manuell gesteuerten Konsole,
o mindestens einen Hodometer (72) zur Bestimmung der gefahrenen Distanz und der aktuellen Geschwindigkeit,
o mindestens eine GNSS-Antenne (74) mit Auswerteeinheit zum Empfangen von Signalen eines globalen satellitengestützten Navigationssystems (GNSS), wie beispielsweise GPS, ein Differential Global Positioning System (DGPS) und/oder Echtzeitkinematik (RTK), und/oder
o mindestens ein Kamera-System (75), beispielsweise zum Abgleichen von Gelände-Fixpunkten und/oder zum Erkennen von Bodenelementen wie Pflanzen in Saatreihen,
umfasst.

7. Geräteträger (1) nach mindestens einem der Ansprüche 1 bis 6, **dadurch gekennzeichnet, dass** der Geräteträger (1) mittels der Radwinkelverstellung (32) eine zur ursprünglich gefahrenen Trajektorie parallel verschobene Trajektorie, und somit eine Querverschiebung, anfahren kann, wodurch der Rahmen (2), und somit der Geräteträger (1) und das Gerät (5), während der Querverschiebung , jederzeit zur Fahrtrichtung parallel ausgerichtet bleibt.

8. Geräteträger (1) nach Anspruch 6 und 7, **dadurch gekennzeichnet, dass** die Steuer- und Kontrolleinheit (7) das mindestens eine Kamera-System (75) umfasst, wobei mittels Steuer- und Kontrolleinheit (7) und Kamera-System (75) die Querverschiebung des Geräteträgers (1) parallel zur Fahrtrichtung optimal auf Bodenelemente ausrichtbar ist, wobei das Kamera-System (75) bevorzugt zum Erkennen von Bodenelementen wie Pflanzen in Saatreihen geeignet ist.

9. Geräteträger (1) nach mindestens einem der Ansprüche 1 bis 8, **dadurch gekennzeichnet, dass** der Geräteträger (1) über die Kupplung (4) mit einem landwirtschaftlichen Gerät (5) verbunden ist, wobei das Gerät (5) bevorzugt
- ein Gerät zur Bodenbearbeitung, zum Säen und/oder Pflanzen, zur Kulturpflege, zum Ernten, und/oder zum Transportieren; und/oder
- eine Umkehrfräse, Kreiselegge, ein Tiefenlockerer, Sägerät, Pflanzgerät, Hackgerät, Geräte zur Unkrautregulierung, Mulch- und/oder Streifenmulchaggregate, Mähbalken und/oder -werke, Geräte zur Schädlingsbekämpfung, Sprüh- und/oder Bewässerungsgeräte, Erntegeräte, Palettenaufnahme, und/oder eine Transportfläche
umfasst.

10. Verfahren zum Bearbeiten von Agrarflächen an Hanglagen mit dem Geräteträger (1) nach mindestens einem der Ansprüche 1 bis 9, wobei der Geräteträger (1) über die Kupplung (4) mit einem landwirtschaftliches Gerät (5) verbunden ist, **dadurch gekennzeichnet, dass** die Position des Geräteträgers (1) durch Steuerung der Geschwindigkeit der Räder (3) mittels Achselement mit Antriebsmotor (31) und Einstellen des Radeinschlag-Winkels (α, α') mittels Radwinkelverstellung (32) so eingestellt wird, dass der Rahmen (2), und somit der Geräteträger (1), sowie das Gerät (5) in Fahrtrichtung gerade und parallel zur Hanglage oder zur vorgegebenen Fahrtrichtung führbar sind.

11. Verfahren nach Anspruch 10, **dadurch gekennzeichnet, dass** die Position des fahrenden Geräteträgers (1) manuell, gegebenenfalls mittels Fahrassistenz, oder mittels Steuer- und Kontrolleinheit (7) selbstfahrend, insbesondere autonom fahrend, gesteuert wird.

12. Verwendung des Geräteträgers (1) nach mindestens einem der Ansprüche 1 bis 9 zum Bearbeiten von Agrarflächen an Hanglagen und/oder flachen, insbesondere kleinräumigen, Lagen.

13. Verwendung nach Anspruch 12, **dadurch gekennzeichnet, dass** pro Stunde bis 5 ha oder mehr, bevorzugt bis 2 ha oder mehr, insbesondere bis 0.5 ha oder mehr, Agrarflächen, insbesondere an Hanglagen und/oder kleinräumigen flachen Lagen, bearbeitet werden können.

14. Verwendung nach Anspruch 12 oder 13, **dadurch gekennzeichnet, dass** die Hanglagen einen Winkel β von bis zu 30° oder mehr, bezogen auf eine waagrechte Ebene, aufweisen.

## Geänderte Patentansprüche

### Geänderte Patentansprüche gemäss Regel 137(2) EPÜ.

1. Landwirtschaftlicher fahrbarer Geräteträger mit Differenziallenkung und Hangausgleich (1) zum Bearbeiten von Agrarflächen an Hanglagen, wobei der Geräteträger (1) einen Rahmen (2), mindestens zwei Räder (3), wobei die mindestens zwei Räder (3) über eine Radaufhängung (21) mit dem Rahmen (2) verbunden sind, eine Kupplung (4) für mindestens ein landwirtschaftliches Gerät (5), mindestens ein Energievorratsbehälter (6) sowie eine Steuer- und Kontrolleinheit (7) umfasst, **dadurch gekennzeichnet, dass** die zwei Räder (3)
- nicht mit einer Achse miteinander verbunden sind,
- je ein Achselement mit Antriebsmotor (31) umfassen, wobei die Räder (3) durch die Achselemente mit Antriebsmotor (31) separat antriebbar sind, wodurch die Räder (3) Antriebsräder (3a) sind, und
- je eine Radwinkelverstellung (32) umfassen, wodurch die Räder (3) einzeln oder gemeinsam um einen Radeinschlag-Winkel (α, α'), relativ zur Fahrtrichtung, verstellbar sind, wodurch der Rahmen (2) des Geräteträgers (1) in Fahrtrichtung gerade und parallel zur Hanglage führbar ist.

2. Geräteträger (1) nach Anspruch 1, **dadurch gekennzeichnet, dass**
- der Rahmen (2) oberhalb der Räder (3) angeordnet ist,
- die mindestens zwei Räder (3) zwei Antriebsräder (3a) und mindestens ein Führungsrad (3b) umfassen, und/oder
- der mindestens eine Energievorratsbehälter (6) eine Batterie oder ein Akku, und das Achselement mit Antriebsmotor (31) ein elektrisch angetriebenes Achselement mit Antriebsmotor (31) ist.

3. Geräteträger (1) nach Anspruch 1 oder 2, **dadurch gekennzeichnet, dass**
- das Achselement mit Antriebsmotor (31) in oder neben der Radachse des Rads (3) angeordnet ist, wobei das Achselement mit Antriebsmotor (31) mit der Mitte der Felge (33) des Rads (3) verbunden ist,
- **die Radwinkelverstellung** (32) in oder an der Radachse des Rads (3), oder im Bereich des Rahmens (2) angeordnet ist, wo die Radaufhängung (21) mit dem Rahmen (2) verbunden ist, und/oder
- der Radeinschlag-Winkel (α, α') zur Radwinkelverstellung (32) der Räder (3) bis ±45°, bevorzugt bis ±30°, insbesondere bis ±15°, beträgt.

4. Geräteträger (1) nach mindestens einem der Ansprüche 1 bis 3, **dadurch gekennzeichnet, dass** die Radwinkelverstellung (32) in oder an der Radachse des Rads (3) angeordnet ist und mit der Radaufhängung (21) fest verbunden ist, wobei die Radwinkelverstellung (32)
- einen Verstellmotor (321),
- eine Gewindespindel (322), welche durch den Verstellmotor (321) drehbar antriebbar ist,
- ein Verbindungselement (325), welches das Achselement mit Antriebsmotor (31) mit der Gewindespindel (322) verbindet, sowie
- einen Winkelsensor (326) zur Messung des Radeinschlag-Winkels (α, α') umfasst, wobei durch Betätigen des Verstellmotors (321) das Verbindungselement (325) entlang der Gewindespindel (322) führbar und das Rad (3) mit dem Winkel (α, α') bewegbar ist.

5. Geräteträger (1) nach Anspruch 4, **dadurch gekennzeichnet, dass** das Verbindungselement (325)
- am Achselement mit Antriebsmotor (31) mittels Gelenk oder Lagerpunkt befestigt ist, und/oder
- auf einer Gewindespindel (322) führbar und über die Gewindespindel (322) linear verstellbar ist.

6. Geräteträger (1) nach mindestens einem der Ansprüche 1 bis 5, **dadurch gekennzeichnet, dass**
- der Geräteträger (1) autonom oder manuell, beispielsweise mittels Konsole gesteuert, fahrbar ist, und/oder
- die Steuer- und Kontrolleinheit (7)
o eine programmierbare Steuerung;
∘ mindestens eine Sende- und Empfangseinheit (71) zum Senden und Empfangen von Daten, insbesondere Geodaten und/oder Steuerdaten der manuell gesteuerten Konsole,
∘ mindestens einen Hodometer (72) zur Bestimmung der gefahrenen Distanz und der aktuellen Geschwindigkeit,
∘ mindestens eine GNSS-Antenne (74) mit Auswerteeinheit zum Empfangen von Signalen eines globalen satellitengestützten Navigationssystems (GNSS), wie beispielsweise GPS, ein Differential Global Positioning System (DGPS) und/oder Echtzeitkinematik (RTK), und/oder
∘ mindestens ein Kamera-System (75), beispielsweise zum Abgleichen von Gelände-Fixpunkten und/oder zum Erkennen von Bodenelementen wie Pflanzen in Saatreihen;
umfasst.

7. Geräteträger (1) nach mindestens einem der Ansprüche 1 bis 6, **dadurch gekennzeichnet, dass** der Geräteträger (1) mittels der Radwinkelverstellung (32) eine zur ursprünglich gefahrenen Trajektorie parallel verschobene Trajektorie, und somit eine Querverschiebung, anfahren kann, wodurch der Rahmen (2), und somit der Geräteträger (1) und das Gerät (5), während der Querverschiebung jederzeit zur Fahrtrichtung parallel ausgerichtet bleibt.

8. Geräteträger (1) nach Anspruch 6 und 7, **dadurch gekennzeichnet, dass** die Steuer- und Kontrolleinheit (7) das mindestens eine Kamera-System (75) umfasst, wobei mittels Steuer- und Kontrolleinheit (7) und Kamera-System (75) die Querverschiebung des Geräteträgers (1) parallel zur Fahrtrichtung optimal auf Bodenelemente ausrichtbar ist, wobei das Kamera-System (75) bevorzugt zum Erkennen von Bodenelementen wie Pflanzen in Saatreihen geeignet ist.

9. Geräteträger (1) nach mindestens einem der Ansprüche 1 bis 8, **dadurch gekennzeichnet, dass** der Geräteträger (1) über die Kupplung (4) mit einem landwirtschaftlichen Gerät (5) verbunden ist, wobei das Gerät (5) bevorzugt
- ein Gerät zur Bodenbearbeitung, zum Säen und/oder Pflanzen, zur Kulturpflege, zum Ernten, und/oder zum Transportieren; und/oder
- eine Umkehrfräse, Kreiselegge, ein Tiefenlockerer, Sägerät, Pflanzgerät, Hackgerät, Geräte zur Unkrautregulierung, Mulch- und/oder Streifenmulchaggregate, Mähbalken und/oder -werke, Geräte zur Schädlingsbekämpfung, Sprüh- und/oder Bewässerungsgeräte, Erntegeräte, Palettenaufnahme, und/oder eine Transportfläche
umfasst.

10. Verfahren zum Bearbeiten von Agrarflächen an Hanglagen mit dem Geräteträger (1) nach mindestens einem der Ansprüche 1 bis 9, wobei der Geräteträger (1) über die Kupplung (4) mit einem landwirtschaftliches Gerät (5) verbunden ist, **dadurch gekennzeichnet, dass** die Position des Geräteträgers (1) durch Steuerung der Geschwindigkeit der Räder (3) mittels Achselement mit Antriebsmotor (31) und Einstellen des Radeinschlag-Winkels (α, α') mittels Radwinkelverstellung (32) so eingestellt wird, dass der Rahmen (2), und somit der Geräteträger (1), sowie das Gerät (5) in Fahrtrichtung gerade und parallel zur Hanglage oder zur vorgegebenen Fahrtrichtung führbar sind.

11. Verfahren nach Anspruch 10, **dadurch gekennzeichnet, dass** die Position des fahrenden Geräteträgers (1) manuell, gegebenenfalls mittels Fahrassistenz, oder mittels Steuer- und Kontrolleinheit (7) selbstfahrend, insbesondere autonom fahrend, gesteuert wird.

12. Verwendung des Geräteträgers (1) nach mindestens einem der Ansprüche 1 bis 9 zum Bearbeiten von Agrarflächen an Hanglagen und/oder flachen, insbesondere kleinräumigen, Lagen.
